# EUROPÄISCHE PATENTSCHRIFT

(11) **EP 2 666 568 B1**
(45) Veröffentlichungstag und Bekanntmachung des Hinweises auf die Patenterteilung: **13.10.2021**
(21) Anmeldenummer: 13160064.5
(22) Anmeldetag: 18.08.2009
(51) Int. Cl.: B23B 31/02, B23B 31/117

(54) **Werkzeughaltervorrichtung**
Tool holder device
Dispositif porte-outil

(30) Priorität: 29.08.2008 DE 102008044996
(43) Veröffentlichungstag der Anmeldung: 27.11.2013
(62) Teilanmeldung aus: 09777948.2
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(56) Entgegenhaltungen:
- EP-A- 0 618 030
- EP-A- 1 084 782
- DE-A1- 4 326 023
- GB-A- 2 401 335
- JP-A- 8 099 245
- US-A1- 2002 145 260
- None

## Beschreibung

Die Erfindung betrifft eine Werkzeughaltervorrichtung nach dem Oberbegriff des Anspruchs 1. Insbesondere betrifft die Erfindung eine Werkzeughaltervorrichtung für Werkzeuge mit einem Schaft, z.B. Schrumpfaufnahmen, oder in der Bauart als Flächenspannfutter, wie Weldonaufnahmen oder Whistle-Notch-Aufnahmen, sowie in der Bauart als Spannzangenaufnahmen, wie z.B. ER-Spannzangenaufnahme, OZ-Spannzangenaufnahme oder Hochgenauigkeits-Spannzangenaufnahme.

Aus der EP 1 074 322 A1 ist ein rotierendes Futter bekannt, welches als Schrumpfspannfutter für ein Werkzeug, insbesondere für einen Bohrer oder Fräser, ausgebildet ist. Dieses rotierende Futter besitzt einen Kühlmittelzuführungs-kanal. Das Schrumpffutter besitzt eine Aufnahmebohrung für das Werkzeug, in dem das Werkzeug im Betrieb mittels eines Schrumpfsitzes gehalten ist. Die Aufnahmebohrung weist über den Umfang ihrer Innenseite verteilt mehrere axial verlaufende Längsnuten auf, welche mit dem Zuführkanal für ein Kühlmittel verbunden sind. Die Nuten erstrecken sich bis zum freien Ende des Schrumpffutters und münden dort ins Freie. Die Nuten sind hinsichtlich ihres Querschnitts als Schmalnuten ausgebildet. Bei einem derartigen Schrumpffutter ist beobachtet worden, dass sich insbesondere bei hohen Rotationsdrehzahlen im Betrieb des Futters, welche insbesondere bei kleinen Werkzeugdurchmessern auftreten, ein Ablösen des stirnseitig austretenden Kühlmittelstrahls vom Werkzeug stattfindet und insbesondere bei längeren Werkzeugen eine zuverlässige Versorgung des Schneidbereiches mit Kühlmittel nicht immer gewährleistet ist. Durch diese schmale Ausführung der Nuten tritt das Kühlmittel in Form von drei singulären Strahlen aus. Auch hierdurch ist nicht immer gewährleistet, dass eine zuverlässige Kühlung des Werkzeuges im Schneidbereich/Zerspanungsbereich sichergestellt ist.

Aus der DE 198 32 793 B4 ist eine Werkzeughaltervorrichtung in Spannzangenbauart bekannt, bei der Kühlmittel im Inneren der Werkzeughaltervorrichtung geführt wird und durch Schlitze der Spannzange am Werkzeugschaft vorbei zur freien Stirnseite der Werkzeughaltervorrichtung geführt wird. Dort sitzt eine Abdeckkappe, welche einen Einsatz besitzt, wobei der Einsatz einen Ringspalt bildet, durch den Kühlmittel aus dem Inneren der Werkzeughaltervorrichtung ins Freie gelangen kann.

Der Kühlmittelaustritt ins Freie erfolgt hierbei relativ undefiniert und kann nicht immer eine saubere Kühlwasserstrahlführung entlang des Werkzeuges sicherstellen. Außerdem ist für eine Werkzeughaltervorrichtung gemäß der DE 198 32 793 B4 ein erheblicher Kühlmitteldurchsatz erforderlich, was wiederum hohe Pumpleistungen für Kühlmittelpumpen erfordert.

Aus der DE 693 31 325 T2 ist eine Werkzeughaltesystem nach Schrumpffutterbauart bekannt, wobei in einer Aufnahmeöffnung für ein zylindrisches Werkzeug Längsnuten vorhanden sind, durch die Kühlmittel geleitet werden kann. Die Längsnuten sind im Querschnitt als Schmalnuten mit gerundetem Nutgrund ausgebildet.

Aus der FR 22 39 84 9 ist eine Werkzeughaltervorrichtung bekannt, welche ebenfalls in einer Aufnahme für ein Werkzeug Längsnuten aufweist, durch die ein Kühlfluid leitbar ist. Die Nuten sind im Querschnitt als Schmalnuten mit einem eckigen Nutgrund ausgebildet. Hierdurch tritt die Kühlflüssigkeit in Form von gebündelten Strahlen ins Freie aus. Dies ist unerwünscht.

Die DE 43 26 023 A1 zeigt einen Werkzeughalter, der mit einer speziellen Kupplung an einer Werkzeugmaschine ankuppelbar ist, so dass ein Kühlmittel in die Kühlmitteleinrichtung einspeisbar ist. Die Konstruktion einer speziellen Kupplung ist aufwändig und komplex.

Die JP H08-099245 zeigt einen Werkzeughalter in Gestalt eines Spannzangenfutters zum Ankoppeln an eine Werkzeugmaschine mit zentraler Kühlmittelausgabe zum Einspeisen von Kühlmittel in Werkzeuge mit innenliegenden Kühlmittelkanälen. Je nach Ausführungsform von Werkzeugen mit oder ohne innenliegenden Kühlkanäle müssen unterschiedliche Deckelelemente verwendet werden. Die zweiteilige Form des Anspruchs 1 ist auf dieser Druckschrift basiert.

Aufgabe der vorliegenden Erfindung ist es daher, eine Werkzeughaltervorrichtung, insbesondere eine Werkzeughaltervorrichtung in Schrumpffutterbauweise anzugeben, bei der die Kühlmittelführung innerhalb der Werkzeughaltervorrichtung optimiert ist und insbesondere beim Austritt der Kühlflüssigkeit aus der Werkzeughaltervorrichtung in Umfangsrichtung um ein Rotationswerkzeug ein geschlossener oder im Wesentlichen geschlossener Kühlmittelmantel, welcher am Schaft des Werkzeuges bzw. am Werkzeug anliegt, gebildet werden kann. Insbesondere sollen Maßnahmen angegeben werden, welche es ermöglichen, den geschlossenen oder im Wesentlichen geschlossenen Kühlmittelmantel um das Rotationswerkzeug auch bei hohen Drehzahlen, unter Einfluss der Fliehkräfte möglichst nah am Werkzeug, d.h. möglichst gebündelt zu führen und ein Aufpilzen bzw. Aufstreuen des Kühlmittelmantels um das Werkzeug zu minimieren bzw. zu verhindern. Als Kühlmittel kommen alle Arten von Flüssigkeiten in Frage, insbesondere eine Flüssigkeit, ein Gas oder ein GasÖl-Gemisch (Ölnebel).

Weiterhin ist es Aufgabe der Erfindung, mit möglichst geringem Kühlmittelvolumenstrom eine möglichst effiziente Kühlung definiert an den Stellen, an denen die Zerspanung stattfindet, zu gewährleisten.

Eine weitere Aufgabe der Erfindung ist es, eine Werkzeughaltervorrichtung anzugeben, bei der ein Kühlmittelaustritt aus der Vorrichtung ohne oder nahezu ohne, zumindest aber jedoch mit reduzierter Tangentialgeschwindigkeit bei einer vorgegebenen Betriebsdrehzahl ermöglicht wird.

Weitere Aufgaben der Erfindung sind es, einen geschlossenen Kühlmittelmantel um das Zerpanungswerkzeug (Rotationswerkzeug) mit befriedigender Strahlführung zur Verfügung zu stellen, ohne allzu große Einschränkungen hinsichtlich der maximal nutzbaren Werkzeuglänge hinnehmen zu müssen.

Weitere Aufgabe der Erfindung ist es, einen Werkzeughalter anzugeben, der zum Einsatz in einer Werkzeugmaschine mit zentraler Kühlmittelzufuhr geeignet ist, der seine Fähigkeit zur Werkzeugkühlung auch dann nicht verliert, wenn er ein Werkzeug ohne innenliegende Kühlkanäle spannt und der anders als die bekannten Werkzeughalter dennoch eine optimale Einspannung des Werkzeugs gewährleistet.

Diese Aufgaben werden mit einer Werkzeughaltervorrichtung mit den Merkmalen des Anspruchs 1 gelöst. Vorteilhafte Ausführungsformen sind in den Unteransprüchen angegeben.

Die Erfindung bildet eine gattungsgemäße Werkzeughaltervorrichtung nach dem Oberbegriff des Anspruchs 1 dadurch weiter,―dass im Bereich des freien Endes (6) des Werkzeughalterkörpers (2) ein Kühlmittelstau und/oder Sammelraum (30) vorhanden ist, in den die zumindest eine Kühlmittelleiteinrichtung (12) mündet und wobei der Kühlmittelstau und/oder Sammelraum (30) über einen Ringspalt (34) mit der Umgebung der Werkzeughaltervorrichtung (1) verbunden ist, wobei der Kühlmittelstau und/oder Sammelraum (30) und der Ringspalt (34) zumindest teilweise vom Werkzeugschaft (5') begrenzt ist, dadurch gekennzeichnet, dass die Kühlmittelleiteinrichtung als Kanal 47 gestaltet ist, der sich von einer Querbohrung (48) im Werkzeughalterkörper (2), die ihrerseits mit der Übergangsbohrung (10) in Verbindung steht, über die das Kühlmittel im Inneren des Werkzeughalterkörpers (2) herangeführt wird, bis zu dessen Stirnseite (8) erstreckt und dort in den Stau- und/oder Sammelraum (30) mündet

Auf diese Art und Weise wird eine gute Kühlmittelzufuhr zum Werkzeug sichergestellt.

Weiterhin hat sich als zweckmäßig erwiesen, innerhalb oder außerhalb des Werkzeughalterkörpers einen Stau- und/oder Sammelraum für Kühlmittel vorzusehen, wobei das Kühlmittel vom Stau- und/oder Sammelraum aus durch einen Ringspalt oder einen Strahlformungsspalt, welcher den Werkzeugschaft umgibt, als vollständig geschlossener Kühlmittelmantel austreten kann.

Weitere vorteilhafte Ausführungsformen sind in weiteren Ansprüchen angegeben und ergeben sich aus der nachfolgenden Beschreibung einzelner Ausführungsbeispiele.

Im Folgenden wird die Erfindung anhand der Zeichnung beispielhaft näher erläutert. Es zeigen:
- Figur 1:: eine erste Ausführungsform einer Werkzeughaltervorrichtung in der Bauart eines Schrumpffutters in einem Teillängsschnitt;
- Figur 1a:: eine Werkzeughaltervorrichtung gemäß Figur 1 in einer Draufsicht auf ihre werkzeugseitige Stirnseite;
- Figur 2:: eine zweite Ausführungsform der Werkzeughaltervorrichtung in der Bauart eines Schrumpffutters in einem Teillängsschnitt;
- Figur 2a:: eine Werkzeughaltervorrichtung gemäß Figur 2 in einer Draufsicht auf ihre werkzeugseitige Stirnseite;
- Figur 3:: eine dritte Ausführungsform der Werkzeughaltervorrichtung in der Bauart eines Schrumpffutters in einem Teillängsschnitt;
- Figur 3a:: eine Werkzeughaltervorrichtung gemäß Figur 3 in einer Draufsicht auf ihre werkzeugseitige Stirnseite;
- Figur 4:: eine vierte Ausführungsform der Werkzeughaltervorrichtung in der Bauart eines Schrumpffutters in einem Teillängsschnitt;
- Figur 4a:: eine Werkzeughaltervorrichtung gemäß Figur 4 in einer Draufsicht auf ihre werkzeugseitige Stirnseite;
- Figur 5:: eine fünfte Ausführungsform der Werkzeughaltervorrichtung in der Bauart eines Schrumpffutters in einem Teillängsschnitt;
- Figur 5a:: eine Werkzeughaltervorrichtung gemäß Figur 5 in einer Draufsicht auf ihre werkzeugseitige Stirnseite;
- Figur 6:: eine sechste Ausführungsform der Werkzeughaltervorrichtung in der Bauart eines Schrumpffutters in einem Teillängsschnitt;
- Figur 6a:: eine Werkzeughaltervorrichtung gemäß Figur 6 in einer Draufsicht auf ihre werkzeugseitige Stirnseite;
- Figur 7:: eine siebte Ausführungsform der Werkzeughaltervorrichtung in der Bauart eines Schrumpffutters in einem Teillängsschnitt;
- Figur 7a:: eine Werkzeughaltervorrichtung gemäß Figur 7 in einer Draufsicht auf ihre werkzeugseitige Stirnseite;
- Figur 8:: eine achte Ausführungsform der Werkzeughaltervorrichtung in der Bauart eines Schrumpffutters in einem Teillängsschnitt;
- Figur 8a:: eine Werkzeughaltervorrichtung gemäß Figur 8 in einer Draufsicht auf ihre werkzeugseitige Stirnseite;
- Figur 9:: eine neunte Ausführungsform der erfindungsgemäßen Werkzeughaltervorrichtung in der Bauart eines Schrumpffutters in einem Teillängsschnitt;
- Figur 9a:: eine Werkzeughaltervorrichtung gemäß Figur 9 in einer Draufsicht auf ihre werkzeugseitige Stirnseite;
- Figur 10:: eine zehnte Ausführungsform der erfindungsgemäßen Werkzeughaltervorrichtung in der Bauart eines Schrumpffutters in einem Teillängsschnitt;
- Figur 11:: eine elfte Ausführungsform der erfindungsgemäßen Werkzeughaltervorrichtung in der Bauart eines Schrumpffutters in einem Teillängsschnitt;
- Figur 12:: eine zwölfte Ausführungsform der erfindungsgemäßen Werkzeughaltervorrichtung in der Bauart eines Schrumpffutters in einem Teillängsschnitt;
- Figur 13:: eine dreizehnte Ausführungsform der erfindungsgemäßen Werkzeughaltervorrichtung in der Bauart eines Schrumpffutters in einem Teillängsschnitt;
- Figur 14:: eine vierzehnte Ausführungsform der erfindungsgemäßen Werkzeughaltervorrichtung in der Bauart eines Schrumpffutters in einem Teillängsschnitt;
- Figur 15:: eine fünfzehnte Ausführungsform der Werkzeughaltervorrichtung in der Bauart eines Schrumpffutters in einem Teillängsschnitt;
- Figur 15a:: eine Werkzeughaltervorrichtung gemäß Figur 15 in einer Draufsicht auf ihre werkzeugseitige Stirnseite;
- Figur 16:: eine sechzehnte Ausführungsform der Werkzeughaltervorrichtung in der Bauart eines Schrumpffutters in einem Teillängsschnitt;
- Figur 16a:: eine Werkzeughaltervorrichtung gemäß Figur 16 in einer Draufsicht auf ihre werkzeugseitige Stirnseite;
- Figur 16b:: eine Detailansicht auf eine Einzelheit "X" gemäß Figur 16;
- Figur 17:: ein Einlegeteil/Einsatzteil (Deckelelement) der Ausführungsform gemäß Figur 16 in einer Draufsicht;
- Figur 17a:: das Einlegeteil/Einsatzteil (Deckelelement)gemäß Figur 17 in einer Querschnittsansicht;
- Figur 18:: eine achtzehnte Ausführungsform der Werkzeughaltervorrichtung in der Bauart eines Schrumpffutters in einem Teillängsschnitt;
- Figur 18a:: eine Werkzeughaltervorrichtung gemäß Figur 18 in einer Draufsicht auf ihre werkzeugseitige Stirnseite;
- Figur 18b:: eine Detailansicht auf eine Einzelheit "X" gemäß Figur 18;
- Figur 19:: eine Draufsicht auf ein Einzelteil der Ausführungsform von Figur 18;
- Figur 19a:: das Einzelteil aus Figur 19 in Querschnittsansicht;
- Figur 20:: eine zwanzigste Ausführungsform der Werkzeughaltervorrichtung in der Bauart eines Schrumpffutters in einem Teillängsschnitt;
- Figur 20a:: eine Werkzeughaltervorrichtung gemäß Figur 20 in einer Draufsicht auf ihre werkzeugseitige Stirnseite;
- Figur 20b:: eine Detailansicht auf eine Einzelheit "X" gemäß Figur 20;
- Figur 21:: eine Draufsicht auf ein Einzelteil der Ausführungsform von Figur 20;
- Figur 21a:: das Einzelteil aus Figur 20 in Querschnittsansicht;

Im Folgenden wird die Erfindung anhand verschiedener Ausführungsbeispiele von Werkzeughaltervorrichtungen in der Bauart eines Schrumpffutters dargestellt. Selbstverständlich sind die dargestellten Einzelheiten für einen Fachmann auch ohne Weiteres auf Werkzeughaltervorrichtungen in der Bauart von Weldonaufnahmen bzw. Whistle-Notch-Aufnahmen übertragbar. Gleiches gilt auch für Werkzeughaltervorrichtungen in Spannzangen-Bauart, beispielsweise ER-Spannzangenaufnahmen, OZ-Spannzangenaufnahmen und/oder Hochgenauigkeits- Spannzangenaufnahmen.

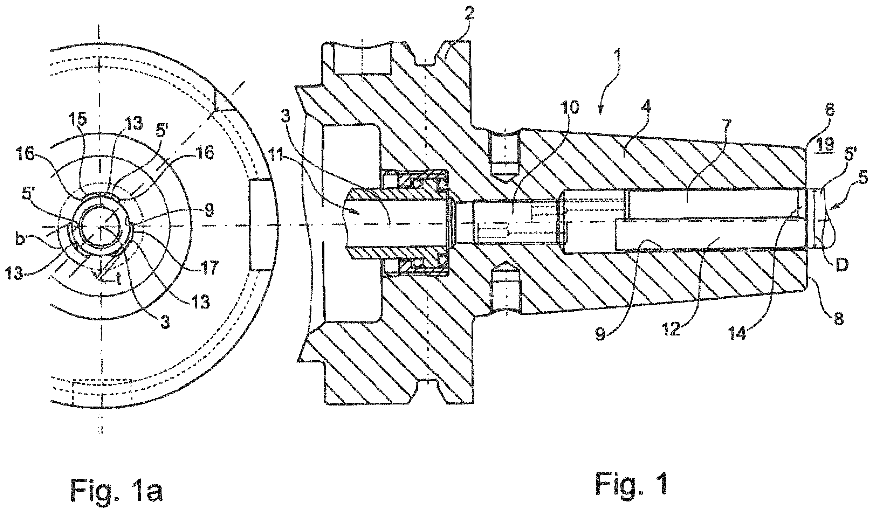

Eine erste Ausführungsform einer Werkzeughalter-Vorrichtung 1 (Figuren 1, la) besitzt einen Werkzeughalterkörper 2 mit einer axialen Längsmittelachse 3, um die der Werkzeughalterkörper 2 im Wesentlichen rotationssymmetrisch ausgebildet ist. Der Werkzeughalterkörper 2 besitzt einen Spannabschnitt 4 zur Aufnahme eines Rotationswerkzeuges/Werkzeuges 5. Das Werkzeug 5 besitzt einen Werkzeugschaft 5', wobei der Schaft 5' vom freien Ende 6 des Werkzeughalterkörpers 2 her in die Aufnahmeöffnung 7 einsetzbar ist. Der Werkzeugschaft 5¹ besitzt einen Nenndurchmesser D. Der Spannabschnitt 4 ist in den hier beschriebenen Ausführungsbeispielen als Schrumpfspannabschnitt ausgebildet, welcher das Werkzeug 5 mittels einer Schrumpfpressung hält. Der Spannabschnitt 4 weist von seinem freien Ende 6 her eine Aufnahmeöffnung 7 auf. Die Aufnahmeöffnung 7 ist im Wesentlichen als Aufnahmebohrung mit der axialen Längsmittelachse 3 als Bohrungsmittelachse ausbildet und erstreckt sich von einer Stirnseite 8 des Spannabschnitts 4 axial ein Stück in den Werkzeughalterkörper 2 hinein. Die Aufnahmeöffnung 7 weist eine Innenseite 9 auf, welche als Spannfläche für das zu haltende Werkzeug 5 wirkt. Die Aufnahmeöffnung 7 erstreckt sich in axialer Richtung des Werkzeughalterkörpers 2 durch den Spannabschnitt 4 hindurch und mündet in eine zentrale Übergangsbohrung 10, welche ihrerseits im weiteren Verlauf in Axialrichtung mit einer Kühlmittelzuführungseinrichtung 11 kommuniziert. Somit ist ein Strömungskanal für Kühlmittelflüssigkeit gebildet, welcher etwa zentral mittig durch den Werkzeughalterkörper 2 führt. Somit kann also Kühlmittelflüssigkeit, welche der Kühlmittelzuführeinrichtung 11 unter Druck zugeführt wird, über die Übergangsbohrung 10 und die Aufnahmeöffnung 7 zum freien Ende 6 des Werkzeughalterkörpers gelangen. Im Bereich des Spannabschnittes 4 sind als Kühlmittelleiteinrichtungen 12 Flachnuten 13 vorhanden, welche zusammen mit dem in der Aufnahmeöffnung 7 eingespannten Werkzeug 5 Strömungskanäle für Kühlflüssigkeit entlang des Werkzeugschaftes 5¹ innerhalb des Spannabschnitts 4 bilden. Die Flachnuten 13 erstrecken sich in axialer Richtung über den Spannabschnitt 4 hinweg bis zum freien Ende 6 des Werkzeughalterkörpers 2. Im Bereich des freien Endes 6 der Aufnahmeöffnung 7 ist eine Innenfase 14 angeordnet. Durch die Innenfase 14 ist die Aufnahmeöffnung 7 im Bereich des freien Endes 6 des Werkzeughalterkörpers 2 sich konisch erweiternd ausgebildet.

Im gezeigten Beispiel gemäß den Figuren 1 und la sind über den Umfang der Aufnahmeöffnung 7 regelmäßig verteilt drei Flachnuten 13 angeordnet. Die Flachnuten 13 haben einen Nutgrund 15 sowie jeweils Nutseitenwandabschnitte 16. Der Nutgrund 15 der Flachnuten 13 ist im Querschnitt gewölbt ausgebildet und besitzt besonders bevorzugt die Raumform einer Zylindersegmentfläche. Die Zylindersegmentfläche ist dabei konzentrisch zur axialen Längsmittelachse 3 ausgebildet.

Die Flachnuten 13 besitzen eine Nuttiefe t und eine Nutbreite b. Die Breite b der Flachnuten 13 ist erfindungsgemäß größer als die Tiefe t der Flachnuten gewählt und ist in besonders bevorzugter Weise wesentlich größer als die Tiefe t ausgebildet. Das Verhältnis der Nutbreite b zur Nuttiefe t der Flachnuten 13 ist größer als 1:1 und beträgt maximal 25:1. Ein bevorzugter Bereich für dieses Verhältnis ist der Bereich zwischen 2:1 und 15:1. Besonders bevorzugt ist ein Verhältnisbereich zwischen 2:1 und 10:1. Die Tiefe t der Flachnuten 13 beträgt 0,5 % bis 15 %, insbesondere 1 % bis 10 % des Werkzeugnenndurchmessers D.

Ein Übergang zwischen dem Nutgrund 15 und den Nutseitenwandabschnitten 16 ist verrundet ausgebildet, was eine exakte und saubere Strahlführung fördert.

Die Flachnuten 13 bilden zusammen mit einem eingesetzten Werkzeug 5 jeweils im Querschnitt ein Ringspaltsegment 17. Durch dieses Ringspaltsegment 17 kann Kühlflüssigkeit im Bereich des freien Endes 6 des Werkzeughalterkörpers 2 direkt am Schaft 5' des Werkzeugs 5 anliegend ins Freie austreten.

Abweichend von der Darstellung gemäß den Figuren 1 und la können die Flachnuten 13 über den Umfang der Innenseite 9 der Aufnahmeöffnung 7 auch ungleichmäßig verteilt sein. Hierdurch ergeben sich unterschiedliche Flächenausdehnungen für die als Spannflächen wirkenden Abschnitte der Innenseite 9. Es konnte beobachtet werden, dass das eingespannte Werkzeug 5 im Betrieb eine geringere Schwingungsanregung erfährt, wenn der Wechsel zwischen Spannflächen und Flachnuten 13 unregelmäßig erfolgt. Dies stellt insbesondere bei hohen Drehzahlen des Werkzeuges 5 einen erheblichen Vorteil dar und hebt die Zerspanungsqualität. Eine weitere Maßnahme zur Verringerung der Schwingungsanregung des Werkzeugs 5 ist, die Breite b der Flachnuten 13 unterschiedlich auszubilden, so dass breitere und weniger breitere Flachnuten 13 vorhanden sind.

Erfindungswesentlich ist, dass die Flachnuten 13 jedenfalls breiter als tief sind, so dass ein in Radialrichtung möglichst dünner und in Tangentialrichtung möglichst breiter Strahl am Austritt im Bereich der Stirnseite 8 gebildet ist. Ein solcher dünner und breiter Strahl haftet auch bei hohen Drehzahlen besser am Werkzeug und schmiegt sich diesem besser an. Hierdurch ist auch bei hohen Drehzahlen die Strahlzerstäubung und die Strahlaufpilzung wesentlich reduziert, so dass auch bei einem längeren Werkzeug 5 Kühlmittel zuverlässig zum Schneidebereich des Werkzeugs 5 geleitet werden kann.

In bevorzugter Art und Weise ist die Tiefe t der Flachnuten 13 derart zur Innenfase 14 abgestimmt, dass der größere, der Stirnseite 8 zugewandte Durchmesser der Innenfase 14 etwa um die doppelte Tiefe t größer ist als der Nominaldurchmesser der Aufnahmeöffnung 7. Hierdurch wird erreicht, dass die Flachnuten 13 direkt an der Stirnseite 8 in Längsrichtung der Werkzeughaltervorrichtung 2 stufenlos auslaufen. Dies bewirkt eine besonders gute Strahlführung und Strahlbildung und reduziert die Strahlzerstäubung nach dem Verlassen des Werkzeughalterkörpers 2.

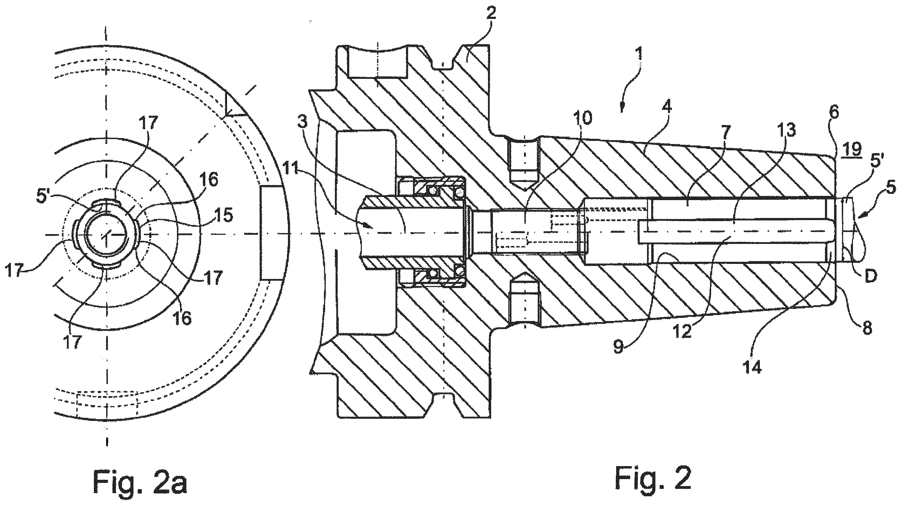

Ein zweites Ausführungsbeispiel der Werkzeughaltervorrichtung 1 ist in den Figuren 2, 2a gezeigt. Diese Ausführungsform dieser Werkzeughaltervorrichtung 1 entspricht im Wesentlichen der Ausführungsform gemäß den Figuren 1, la, so dass gleiche Elemente mit gleichen Bezugszeichen versehen sind. Die Ausführungsform gemäß den Figuren 2, 2a unterscheidet sich lediglich in der Anzahl der Flachnuten 13, welche über den Umfang der Innenseite 9 verteilt vorgesehen sind. Im vorliegenden Beispiel gemäß den Figuren 2, 2a sind hier 4 Flachnuten gezeigt. Die übrigen im Zusammenhang mit den Figuren 1, la beschriebenen Merkmale und Funktionen der Werkzeughaltervorrichtung sind selbstverständlich auch für das Ausführungsbeispiel gemäß den Figuren 2, 2a gültig.

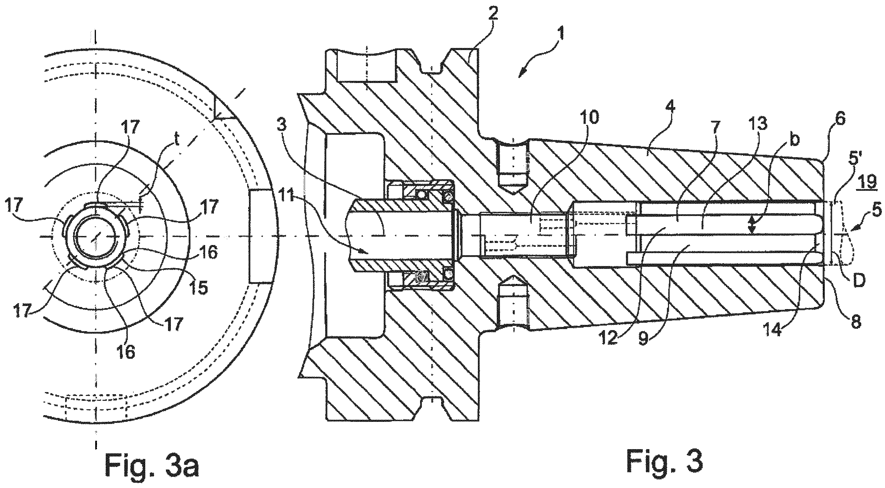

Ein weiteres Ausführungsbeispiel der Werkzeughaltervorrichtung 1 ist in den Figuren 3, 3a gezeigt.

Diese Ausführungsform der Werkzeughaltervorrichtung 1 entspricht im Wesentlichen der Ausführungsform gemäß den Figuren 1, la, so dass gleiche Elemente mit gleichen Bezugszeichen versehen sind. Die Ausführungsform gemäß den Figuren 3, 3a unterscheidet sich lediglich in der Anzahl der Flachnuten 13, welche über den Umfang der Innenseite 9 verteilt vorgesehen sind. Im vorliegenden Beispiel gemäß den Figuren 3, 3a sind hier 5 Flachnuten gezeigt. Die übrigen im Zusammenhang mit den Figuren 1, la beschriebenen Merkmale und Funktionen der Werkzeughaltervorrichtung 1 sind selbstverständlich auch für das Ausführungsbeispiel gemäß den Figuren 3, 3a gültig.

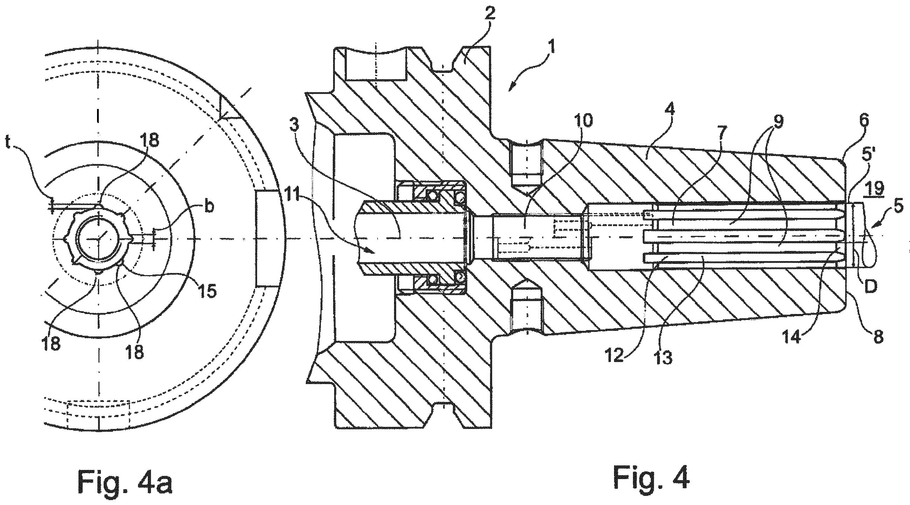

Ein weiteres Ausführungsbeispiel der Werkzeughaltervorrichtung 1 ist in den Figuren 4, 4a dargestellt. Diese Ausführungsform unterscheidet sich von den vorbeschriebenen Ausführungsformen durch die Querschnittsform der Flachnuten 13. Beim Ausführungsbeispiel gemäß den Figuren 4, 4a sind diese als im Querschnitt halbkreisförmige Flachnuten 13 ausgebildet. Die Nuttiefe t beträgt bei dieser Ausführungsform etwa die Hälfte der Nutbreite b. Somit handelt es sich bei den Flachnuten 13 gemäß der Ausführungsform 4, 4a um Flachnuten im Sinne der Erfindung, bei denen die Nuttiefe t kleiner ist als die Nutbreite b. Die Flachnuten 13 dieser Ausführungsform bilden zusammen mit dem Werkzeugschaft 5' im Querschnitt näherungsweise halbkreisförmige Strömungskanäle 18. Des Weiteren unterscheidet sich das Ausführungsbeispiel gemäß den Figuren 4 und 4a von den vorbeschriebenen Ausführungsformen durch die Anzahl der Flachnuten, die über den Umfang der Innenseite 9 verteilt angeordnet sind. Im vorliegenden Beispiel handelt es sich hierbei um 8 Flachnuten 13.

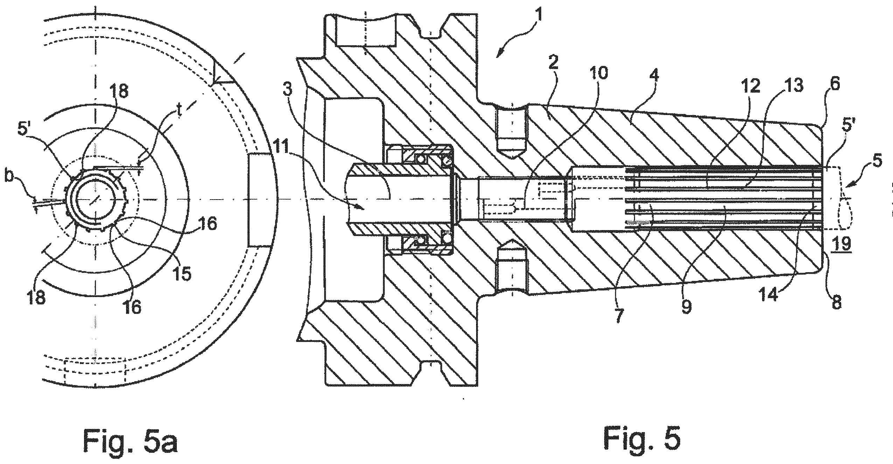

Gemäß einer weiteren Ausführungsform der Werkzeughaltervorrichtung 1 (Figuren 5, 5a) ist eine Vielzahl von im Querschnitt rechteckförmigen Flachnuten 13 vorgesehen, bei denen die Nutseitenwandabschnitte 16 und der Nutgrund 15 jeweils scharfkantig übergehen. Die Breite b der Flachnuten 13 ist etwas größer als die Tiefe t, so dass auch die Flachnuten 13 des Ausführungsbeispiels gemäß den Figuren 5, 5a mit Flachnuten im Sinne der Erfindung ausgestattet ist. Die Anzahl der vorhandenen Flachnuten 13 beträgt hier 15. Hierdurch sind zwei benachbarte Flachnuten 13 relativ eng zueinander benachbart zueinander angeordnet. Hierdurch verlassen viele Kühlflüssigkeitsstrahlen im Bereich der Stirnseite 8 direkt benachbart nebeneinander den Werkzeughalterkörper 2. Durch den geringen Abstand zwischen zwei benachbarten Kühlmittelstrahlen ist beobachtet worden, dass sich zwei benachbarte Strahlen außerhalb des Werkzeughalterkörpers 2 vereinigen und somit einen im Wesentlichen geschlossenen Kühlmittelmantel um den Schaft des Werkzeugs 5 bilden.

Die Flachnuten 13 dieser Ausführungsform bilden zusammen mit dem Werkzeugschaft 5' im Querschnitt im Wesentlichen rechteckige, insbesondere flachrechteckige Strömungskanäle 18.

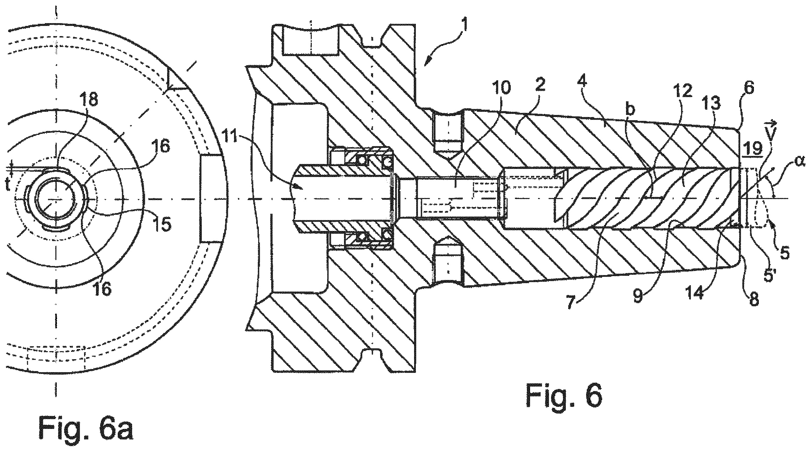

Eine weitere Ausführungsform der Werkzeughaltervorrichtung 1 gemäß den Figuren 6, 6a entspricht im Wesentlichen dem Grundaufbau der Ausführungsform gemäß den Figuren 2, 2a und besitzt vier Flachnuten 13 mit gewölbtem Nutgrund 15. Im Unterschied zur Ausführungsform gemäß den Figuren 2, 2a sind die Flachnuten 13 entlang der Innenseite 9 der Aufnahmeöffnung 7 gewendelt ausgebildet. Hierdurch schließt eine Nutmittelachse in einer Seitenansicht mit der axialen Längsmittelachse 3 einen Winkel a ein. Durch die Wendelung der Flachnuten 13 im Inneren der Aufnahmeöffnung 7 verlässt das unter Druck stehende Kühlmittel, welches entlang dieser gewendelten Flachnuten zur freien Stirnseite 8 hin gefördert wird, die Nuten mit einer Geschwindigkeitskomponente v . Die Wendelung kann sowohl gleichläufig zu einer Drehrichtung des Werkzeugs 5 im Betrieb als auch bevorzugt gegengerichtet zur Drehrichtung des Werkzeugs im Betrieb angeordnet sein. Insbesondere die gegengerichtete Anordnung der Wendelung der Flachnuten 13 kann eine Verbesserung der Strahlführung, insbesondere für lange Werkzeuge 5 ergeben, da die Tangentialgeschwindigkeits- komponente, welche die Kühlflüssigkeit durch das Rotieren des Werkzeughalterkörpers 2 im Betrieb erfährt, hierdurch beim Austreten aus den Flachnuten 13 in die Umgebung 19 durch eine gegengerichtete Geschwindigkeitskomponente v verringert wird. Somit kann eine verbesserte Strahlführung erreicht werden.

Bei einer gleichläufig gerichteten Wendelung ist von Vorteil, dass das austretende Kühlmittel einen Tangentialgeschwindigkeitsüberschuss gegenüber dem Werkzeug 5 beim Austritt aus den Flachnuten 13 besitzt. Unter gewissen Umständen kann beispielsweise bei relativ ruhender Umgebungsluft oder relativ zirkulierender Umgebungsluft eine bessere Anhaftung des Kühlmittelstrahles am Werkzeug 5 erreicht werden, da durch die umgebende Luft zunächst der Tangentialgeschwindigkeitsüberschuss abgebremst werden muss und etwas entfernt von der Stirnseite 8 die Tangentialgeschwindigkeit des Kühlmittels in etwa der Tangentialgeschwindigkeit der Werkzeugschaftaußenseite entspricht. Dies kann zu einer verbesserten Strahlanhaftung am Werkzeug führen.

Bevorzugte Werte für den Winkel a liegt zwischen 1° und 60°, insbesondere zwischen 5° und 45°.

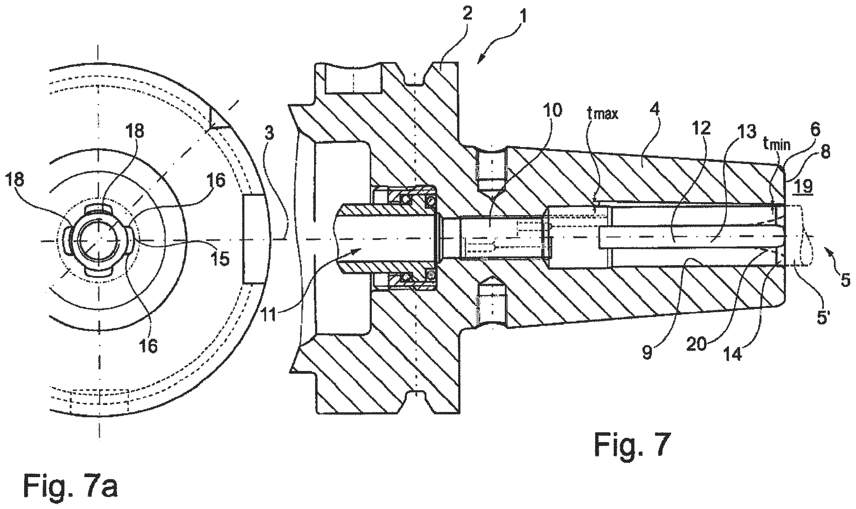

Bei einer weiteren Ausführungsform der Werkzeughaltervorrichtung 1 gemäß den Figuren 7, 7a besitzen die Flachnuten 13 eine sich zum freien Ende 6 des Werkzeughalterkörpers 2 hin verringernde Tiefe t. Hierdurch verengt sich der wirksame Durchflussquerschnitt der Ringspaltsegmente 17 bzw. der Strömungskanäle 18, wodurch eine Beschleunigung des Kühlmittelfluids zum freien Ende 6 des Werkzeughalterkörpers 2 hin erfolgt. Hierdurch kann eine Strahlbündelung bzw. eine bessere Anhaftung des austretenden Kühlmittelstrahles am Schaft 5' des Werkzeugs 5 erreicht werden, da im Bereich der Stirnseite 8 der austretende Strahl nur eine geringe radiale Dicke aufweist. Durch diese Maßnahme gelingt es auch, die einzelnen Kühlmittelstrahlen, welche den Werkzeughalterkörper 2 durch die Strömungskanäle 18 bzw. die Ringspaltsegmente 17 verlassen, verbessert außerhalb des Werkzeughalterkörpers 2 zu vereinigen und somit einen im Wesentlichen geschlossenen oder geschlossenen Kühlmittelmantel um das Werkzeug 5 zu erzeugen.

Unterstützt werden kann dies noch dadurch, dass sich die Nuten 13 hinsichtlich ihrer Breite b zum freien Ende 6 hin ein Stück erweitern, was durch die gestrichelte Linie 20 in Figur 7 angedeutet ist. Durch diese Maßnahme liegen benachbarte Strahlkanten beim Ausfluss des Kühlmittels aus den Strömungskanälen 18 näher beieinander, so dass eine Vereinigung benachbarter Strahlen wahrscheinlicher ist.

Als insbesondere vorteilhaft hat sich erwiesen, eine maximale Nuttiefe tₘₐₓ entlang der Nut bis hin zum freien Ende 6 auf einen Wert tmin gemessen von der Innenseite 9 der Aufnahmeöffnung 7 zu reduzieren, wobei tₘiₙ bevorzugt ein Viertel der Tiefe tₘₐₓ bis zwei Drittel der Tiefe tₘₐx beträgt.

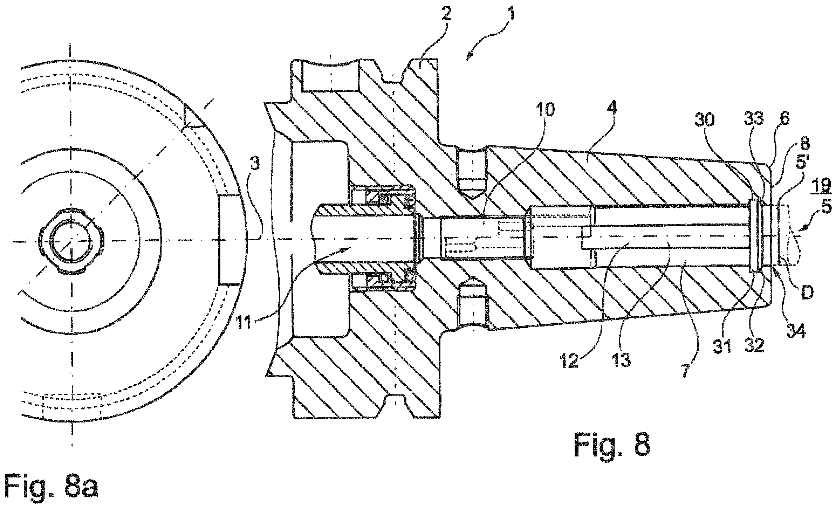

Gemäß einer weiteren Ausführungsform der Werkzeughaltervorrichtung 1 (Figuren 8, 8a) ist ein Kühlmit- telstau- und/oder sammelraum 30 vorgesehen, in der die Kühlmittelleiteinrichtungen 12, welche als Flachnuten 13 ausgebildet sind, münden. Der Stau- und/oder Sammelraum 30 sitzt innerhalb des Werkzeughalterkörpers 2 und wird durch eine umlaufende Ringnut 31 gebildet, welche sich von der Aufnahmeöffnung ein Stück radial nach außen erstreckt. In Längsrichtung des Werkzeughalterkörpers 2 gesehen sitzt der Stau- und/oder Sammelraum 30 im Bereich des äußersten Endbereiches des freien Endes 6. Der Stau- und/oder Sammelraum 30 ist lediglich durch einen Ringbegrenzungssteg 32 von der freien Stirnseite 8 getrennt. Der Stau- und/oder Sammelraum 30 geht mittels einer konisch sich verjüngenden Begrenzungswandung 33 in den Ringsteg 32 über. Der Ringbegrenzungssteg 32 bildet zusammen mit dem eingespannten Werkzeug 5 einen engen Ringspalt 34. Der Innendurchmesser des Ringbegrenzungsstegs 32 ist geringfügig größer als der Außendurchmesser D des Werkzeugschaftes 5'. Hierdurch wird der sehr schmale, den Werkzeugschaft 5' vollständig umgebende Ringspalt 34 gebildet, durch welchen zwischen dem Werkzeugschaft 5' und dem Ringsteg Kühlmittel aus dem Stau- und/oder Sammelraum 30 in die Umgebung austreten kann. Hierdurch wird insbesondere ein geschlossener Kühlmittelmantel, welcher von der Stirnseite 8 weg den Schaft 5' vollständig umgibt, erzeugt. Der Stau- und/oder Sammelraum 30 dient zur Vereinigung der einzelnen Kühlmittelströme, welche durch die Flachnuten 13 in den Stau- und/oder Sammelraum 30 gelangen. Besonders vorteilhaft ist die Anordnung des Stau- und/oder Sammelraumes 30 innerhalb des Werkzeughalterkörpers 2 da hierdurch zum einen eine besonders einfache, insbesondere einstückige Herstellung des Werkzeughalterkörpers 2 ermöglicht ist und zum anderen der Stau- und/oder Sammelraum 30 keine Störkonturen außerhalb der Außenkontur des Werkzeughalterkörpers 2 bildet. Hierdurch ist eine besonders gute Ausnutzung des eingespannten Werkzeuges 5 möglich. Insbesondere durch das Vorsehen von Flachnuten 13 im Sinne der Erfindung als Kühlmittelleiteinrichtungen 12 zur Versorgung des Stau- und/oder Sammelraums 30 mit Kühlflüssigkeit, kann dieser vom Volumen her klein gehalten werden, da aufgrund der breitspurigen Zuführung des Kühlmittels nur wenig Volumen notwendig ist, um eine zuverlässige Vereinigung und Verwirbelung der einzelnen Kühlmittelströme aus den Flachnuten 13 zu bewirken. Hierdurch kann die Nuttiefe der Ringnut 31 gering gehalten werden. Somit kann eine Schwächung des Werkzeughalterkörpers 2 in seinem freien Endbereich 6 klein gehalten werden. Es genügt lediglich ein radial gering bemessener Einstich in Form einer Ringnut 31 zur Ausbildung eines ausreichend großen Stau- und/oder Sammelraums 30.

Abgesehen von den oben beschriebenen Details unterscheidet sich die Ausführungsform der Werkzeughaltervorrichtung 1 nicht weiter von der Ausführungsform gemäß den Figuren 2, 2a.

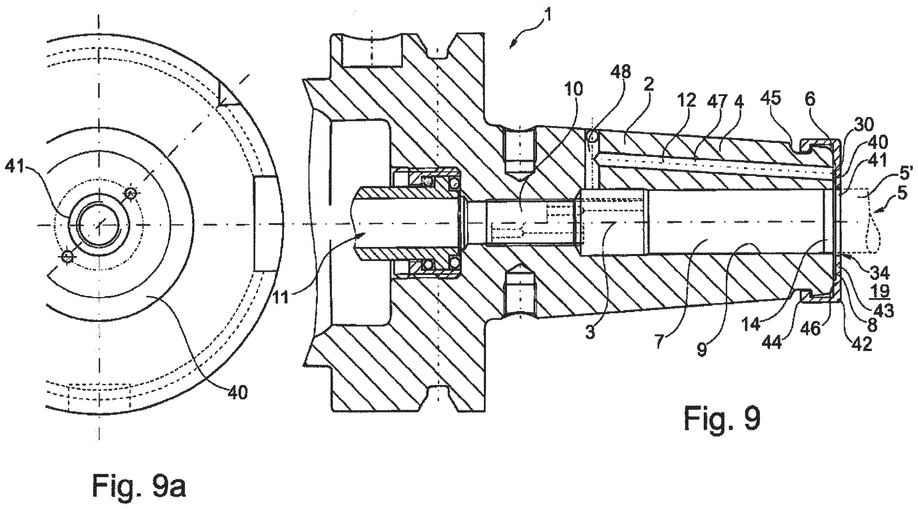

Bei einer weiteren Ausführungsform der erfindungsgemäßen Werkzeughaltervorrichtung 1 gemäß den Figuren 9, 9a ist der Stau- und/oder Sammelraum 30 außerhalb des Werkzeughalterkörpers 2 angeordnet und wird zum einen von der Stirnseite, vom Werkzeugschaft 5' und zum anderen von einem Deckelelement 40 begrenzt. Der Stau- und/oder Sammelraum 30 ist somit in axialer Längsrichtung auf die Stirnseite 8 des freien Endes 6 des Werkzeughalterkörpers 2 folgend außerhalb des Werkzeughalterkörpers 2 angeordnet.

Das Deckelelement 40 ist beispielsweise als Kappe 42 ausgebildet. Die Kappe 42 besitzt einen Kappenboden 43, in dem eine Austrittsöffnung 41 eingebracht ist. Die Austrittsöffnung 41 bildet zusammen mit dem Werkzeugschaft 5' des Werkzeuges 5 den Ringspalt 34. Die Kappe 42 umgreift das freie Ende 6 des Werkzeughalterkörpers 2 außenumfänglich und greift mittels einer Schnappeinrichtung 44, welche beispielsweise als durchgängiger Schnappring oder als eine Vielzahl von Schnapplappen ausgebildet sein kann, in eine Außenumfangsnut 45, welche im Bereich des Spannabschnitts 4 angeordnet ist, schnappend ein und legt somit das Deckelelement 40 relativ zum Werkzeughalterkörper 2 sowohl in axialer als auch in radialer Richtung fest. Im Bereich des Kappenbodens 43 ist bevorzugt ein Ringsteg 46 vorgesehen, welcher sich in Längsrichtung ein Stück vom Kappenboden 43 zur Stirnseite 8 erstreckt und mit dieser dichtend zusammenwirkt. Hierdurch ist ein Ringspalt von geringer axialer Länge gebildet, welcher den Stau- und/oder Sammelraum 30 bildet.

Alternativ zu den bisher beschriebenen Flachnuten als Kühlmittelleiteinrichtung 12 ist bei dieser Ausführungsform als Kühlmittelleiteinrichtung 12 ein Kanal 47 vorgesehen, welcher sich von einer Querbohrung 48 im Werkzeughalterkörper 2 bis zur freien Stirnseite 8 erstreckt und dort im Stau- und/oder Sammelraum 30 mündet. Die Querbohrung 48 steht mit der Übergangsbohrung 10 in Verbindung, so dass über die Kühlmittelzuführeinrichtung 11, die Querbohrung 4 8 und den Kanal 47 der Stau- und/oder Sammelraum 30 mit Kühlmittel beschickbar ist. Bei dieser Ausgestaltung können die Flachnuten 13 entfallen.

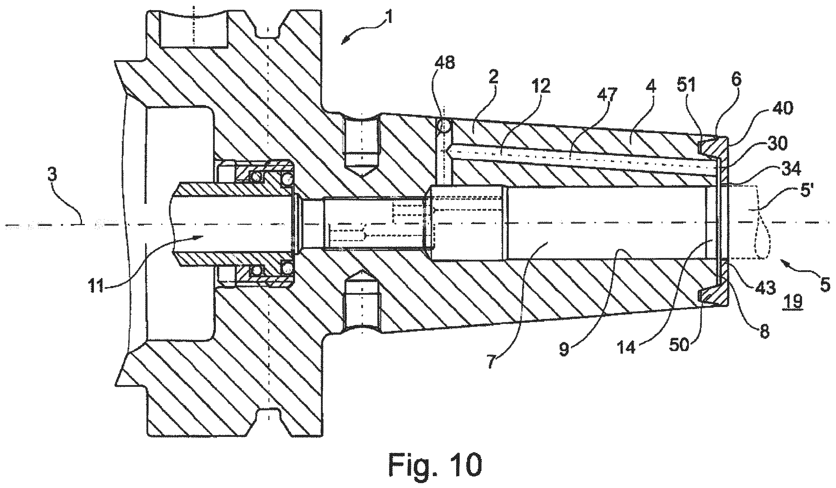

Ein weiteres Ausführungsbeispiel der erfindungsgemäßen Werkzeughaltervorrichtung 1 ist in Figur 10 schematisch dargestellt. Dieses Ausführungsbeispiel ist im Wesentlichen ähnlich zum Ausführungsbeispiel gemäß den Figuren 9 und 9a ausgebildet. Lediglich das Deckelelement 40 ist hinsichtlich seiner Befestigung am Werkzeughalterkörper unterschiedlich ausgebildet.

Damit das Deckelelement 4 0 bei dieser Ausführungsform nicht über eine Außenumfangskontur des Werkzeughalterkörpers 2 übersteht, verfügt das Deckelelement 40 über Befestigungseinrichtungen 50, welche mit stirnseitigen Gegenbefestigungseinrichtungen 51 zusammenwirken.

Die Befestigungseinrichtung 50 kann beispielsweise als umlaufender Ringsteg ausgebildet sein, welcher mittels Presssitz in der Gegenbefestigungseinrichtung 51, welche beispielsweise als umlaufende Ringnut in der Stirnseite 8 des Werkzeughalterkörpers ausgebildet ist, zusammenwirkt. Im Übrigen ist die Ausführungsform gemäß Figur 10, insbesondere was die Ausgestaltung der Kühlmittelleiteinrichtungen 12 und die Bildung des Stau- und/oder Sammelraums 30 sowie des Ringsspalts 34 angeht, vergleichbar mit der Ausführungsform gemäß den Figuren 9, 9a.

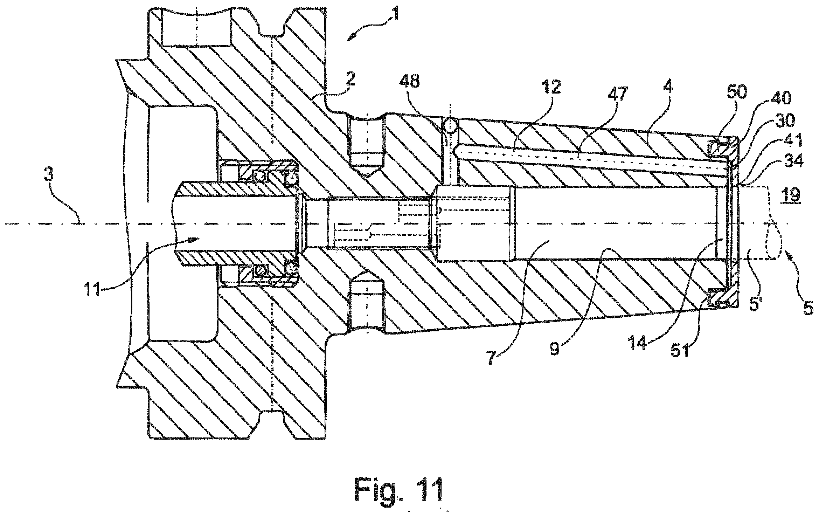

In einer weiteren Ausführungsform der erfindungsgemäßen Werkzeughaltervorrichtung 1 gemäß Figur 11 sind die Befestigungseinrichtungen 50 und die Gegenbefestigungseinrichtungen 51 als Schnapp- und Gegenschnappeinrichtungen ausgebildet, wobei hierbei, wie auch bei der Ausführungsform gemäß Figur 10 besonders vorteilhaft ist, dass das Deckelelement 40 keinen radialen Überstand über die Außenkontur des Werkzeughalterkörpers 2 besitzt.

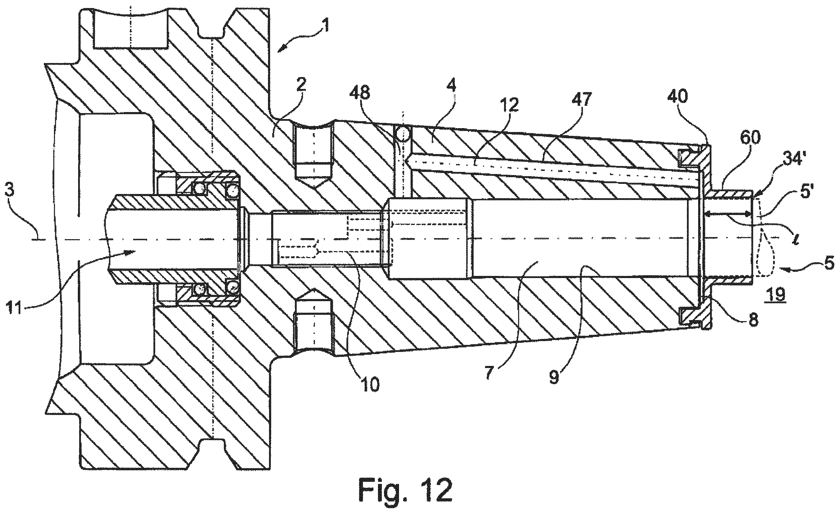

Die Ausführungsform gemäß Figur 12 entspricht im Wesentlichen der Ausführungsform gemäß Figur 11, wobei das Deckelelement zusätzlich einen Strahlformkragen 60 aufweist, der sich axial vom Deckelelement 4 0 von der Stirnseite 8 ein Stück weg erstreckt. Der Strahlformkragen 60 besitzt eine wirksame Länge 1 und umgibt den Werkzeugschaft 5' unter Bildung eines Strahlformringkanals 34' der Länge 1.

Bevorzugt beträgt das Verhältnis der axialen Länge 1 des Strahlformringkanals 34' zum Werkzeugschaftdurchmesser D zwischen 0,2:1 und 1:1, liegt insbesondere im Bereich zwischen 0,3:1 und 0,8:1 und besonders bevorzugt im Bereich von 0,4:1 bis 0,7:1.

Durch das Vorsehen eines Strahlformringkanals 34' gebildet durch einen Strahlformkragen 60 gelingt eine besonders gleichmäßige Ausgestaltung des Kühlmittelmantels um den Werkzeugschaft 5'. Auch die Tendenz des Kühlmittelmantels zum Aufpilzen nachdem das Kühlmittel den Strahlformringkanal 34' verlassen hat, ist verringert.

Die angegebenen Verhältnisbereiche zwischen der axialen Länge 1 des Strahlformringkanals 34' und dem Werkzeugschaftdurchmesser D stellen eine guten Kompromiss zwischen guter Strahlqualität und einer noch akzeptablen Veränderung der Außenkontur des Werkzeughalterkörpers 2 dar, damit eine noch möglichst optimale Werkzeugausnutzung ohne die Gefahr von Kollisionen bei der Programmierung von z.B. Fräsprogrammen herrscht. Selbstverständlich ist der Gedanke des Vorsehens eines Strahlformkragens 60 ohne Weiteres auf die Ausführungsformen der Werkzeughaltervorrichtung 1 insbesondere gemäß den Figuren 9, 9a, 10, 11 und auch auf die nachfolgend beschriebenen Ausführungsvarianten übertragbar. Lediglich zum Zwecke der Verdeutlichung wurde der Strahlformkragen 60 anhand eines Deckelelements 40 mit Befestigungseinrichtungen 50, 51 nach der Ausführungsform gemäß Figur 11 dargestellt.

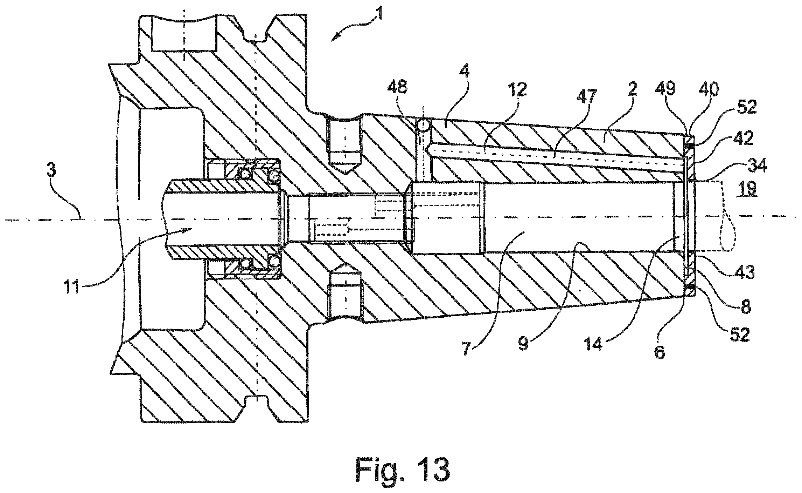

In einer weiteren Ausführungsform der erfindungsgemäßen Werkzeughaltervorrichtung 1 (Fig. 13) ist das Deckelelement 4 0 ebenfalls als Kappe 42 ausgebildet. Die Kappe 42 besitzt randlich umlaufend einen Verdickungswulst 4 9, damit der Kappenboden 43 axial beabstandet von der Stirnseite 8 angeordnet ist und so der Stau- und/oder Sammelraum 30 gebildet ist. Weiterhin besitzt die Kappe 42 gemäß dieser Ausführungsform zu ihrer Befestigung Bohrungen 52, durch die die Kappe 42 mit dem Werkzeughalterkörper 2 verschweißt ist. Selbstverständlich kann auch eine umlaufende Schweißnaht Verwendung finden. Im Übrigen entspricht die Ausführungsform gemäß Figur 13 den Ausführungsformen gemäß den Figuren 10 und 11. Selbstverständlich kann an die Kappe 42 ebenso ein Strahlformkragen, wie in Figur 12 beschrieben, angeformt sein.

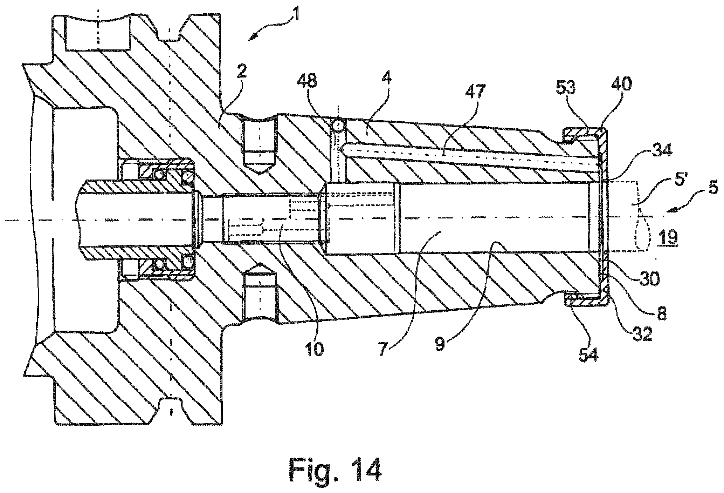

Bei der Ausführungsform gemäß Figur 14 ist das Deckelelement 40 nach Art einer Überwurfmutter mit einem weiblichen Gewinde 53 ausgestaltet, welches mit einem männlichen Gewinde 54 am Werkzeughalterkörper 2 zusammenwirkt. Zur Abdichtung des Stau- und/oder Sammelraumes 30 ist der Ringbegrenzungssteg 32 vorgesehen, der mit der Stirnseite 8 zusammenwirkt.

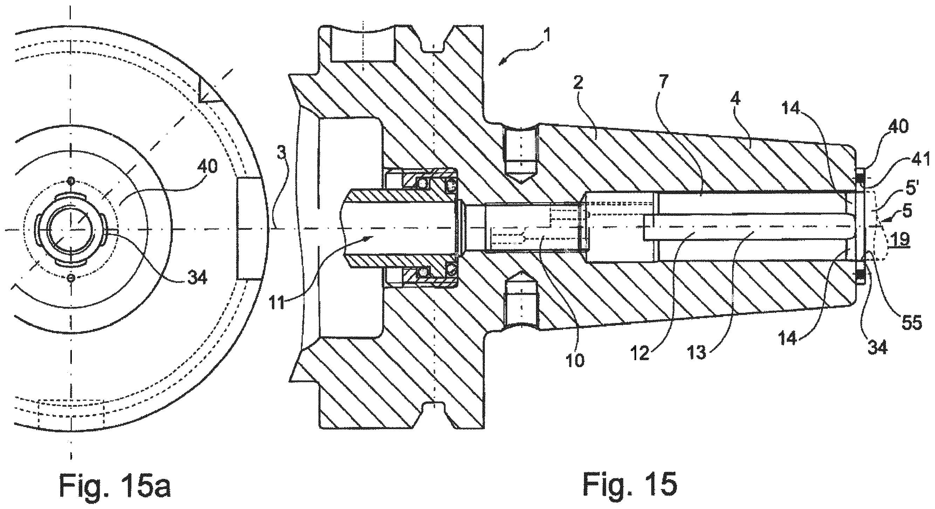

Die nachfolgend beschriebenen Ausführungsformen der Werkzeughaltervorrichtung 1 (Figuren 15 bis 21a) sind Ausführungsformen, bei denen der Stau- und/oder Sammelraum 30 innerhalb des Werkzeughalterkörpers 2 angeordnet ist und radial im Wesentlichen von der Innenfase 14 begrenzt ist. Das bedeutet, dass ein wesentlicher Anteil des Volumens des Stau- und/oder Sammelraums 30 innerhalb der konischen Erweiterung der Aufnahmeöffnung 7 im Bereich der Innenfase 14 durch die Innenfase 14 gebildet ist. Im Unterschied hierzu ist der Stau- und/oder Sammelraum 30 gemäß der Ausführungsform nach Figur 8 im Wesentlichen durch die Ringnut 31 gebildet. Bei den Ausführungsformen nach den Figuren 9 bis 14 ist der wesentlich größte Teil des Volumens des Stau- und/oder Sammelraums 30 durch die Stirnseite 8 des Werkzeughalterkörpers und das Deckelelement 40 begrenzt. Die Stau- und/oder Sammelräume 30 dieser Ausführungsform liegen somit mit ihrem wesentlichen Volumen außerhalb des Werkzeughalterkörpers 2.

Bei einer ersten Ausführungsform dieses Typs (Fig. 15) der Werkzeughaltervorrichtung 1 ist auf der Stirnseite 8 des Werkzeughalterkörpers 2 das Deckelelement 40 mittels Schweißung aufgesetzt. Das Deckelelement 40 ist nach Art einer planen Lochscheibe ausgebildet und weist die Austrittsöffnung 41 auf. Die Innenfase 14 ist hinsichtlich ihrer Neigung derart abgestimmt, dass der größte Durchmesser direkt benachbart zur Stirnseite 8 angeordnet ist und dieser Durchmesser etwas größer ist als der Innendurchmesser der Austrittsöffnung 41, so dass eine Ringkante 55 des Deckelelements ein Stück radial in den gefasten Bereich der Aufnahmebohrung 7 hineinragt und somit für Kühlmittelflüssigkeit, welche sich im Bereich der Innenfase 14 befindet, eine Staukante oder Sammelkante bildet. Der Innendurchmesser der Austrittsöffnung 41 ist im Übrigen relativ zum Werkzeugschaft 5' des Werkzeuges 5 so ausgebildet wie vorbeschrieben. Hierdurch ist wiederum die Ausbildung des Ringspaltes 34 in bereits vorbeschriebener Art und Weise sichergestellt.

Diese Ausführungsform hat den besonderen Vorteil, dass das Deckelelement nur in sehr geringem Maße axial über die Außenkontur des Werkzeughalterkörpers übersteht und somit das Werkzeug 4 nahezu in seiner vollen Länge nutzbar bleibt. Gleichwohl ist durch die Innenfase 14 und das Deckelelement 40 wirksam ein Stau- und/oder Sammelraum 30 ausgebildet, der über die Flachnuten 13 mit Kühlmittelflüssigkeit versorgt wird. Diese Ausführungsform ist besonders einfach herstellbar und es ist insbesondere möglich, eine Ausführungsform gemäß den Figuren 1 bis 7 in einfacher Art und Weise nachträglich mit einem Stau- und/oder Sammelraum 30 auszustatten. Hierdurch kann ein gutes Ergebnis erzielt werden, was die Strahlformung und den geschlossenen Kühlmittelmantel um das Werkzeug 5 herum angeht.

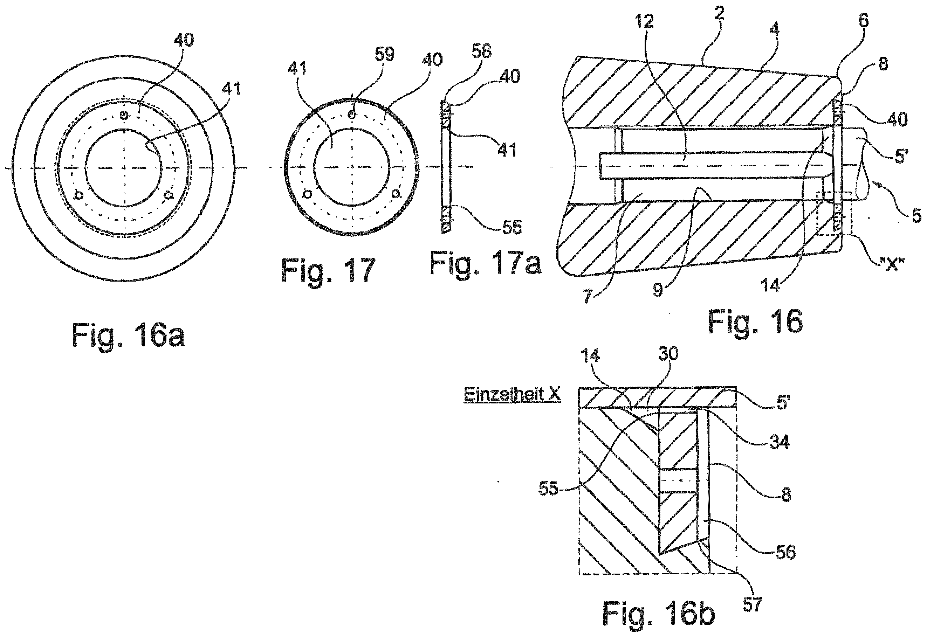

Bei einer weiteren Ausführungsform der Werkzeughaltervorrichtung 1 ist in der Stirnseite 8 des Werkzeughalterkörpers 2 eine Flachvertiefung 56 vorhanden, in der das Deckelelement 40 versenkt sitzt. Hierdurch ist die Außenkontur des Werkzeughalterkörpers 2 durch das Deckelelement 40 nicht verändert (vergleiche Figuren 16, 16a, 16b).

Die Flachvertiefung 56 ist im Querschnitt im Wesentlichen trapezförmig ausgebildet und verjüngt sich zur Stirnseite 8 hin, so dass eine Hinterschnittkante 57 ausgebildet ist. Korrespondierend hierzu ist das Deckelelement 40 (Figuren 17, 17a) nach Art einer planen Lochscheibe ausgebildet und besitzt eine angefaste Außenkante 58, welche mit dem Hinterschnitt der Flachvertiefung 56 korrespondiert. Das Deckelelement besitzt die Austrittsöffnung 41, so dass zwischen dem Werkzeugschaft 5' und der Austrittsöffnung 41 der Ringspalt 34 ausgebildet ist. Eine Stau- und/oder Sammelkante 55 begrenzt zusammen mit der Innenfase 14 den Stau- und/oder Sammelraum 30. Zur Montage des Deckelelements 40 dieser Ausführungsform wird das Deckelelement 40 federnd nach Art einer Tellerfeder gewölbt und im gewölbten Zustand an der Hinterschnittkante 57 vorbei in die Flachvertiefung 56 eingesetzt. Danach kann die federnde Vorspannung gelöst werden, so dass das Deckelelement 40 gegebenenfalls mit einer Restfedervorspannung vorgespannt in der Vertiefung 56 sitzt und somit sowohl radial als auch axial festgelegt ist. Zweckmäßigerweise weist das Deckelelement 40 über den Umfang verteilt Montagebohrungen 59 auf, in welche Stifte einsetzbar sind, mittels denen die federnde Vorspannung und federnde Wölbung durch radiales Zusammenführen der Stifte erzeugt werden kann.

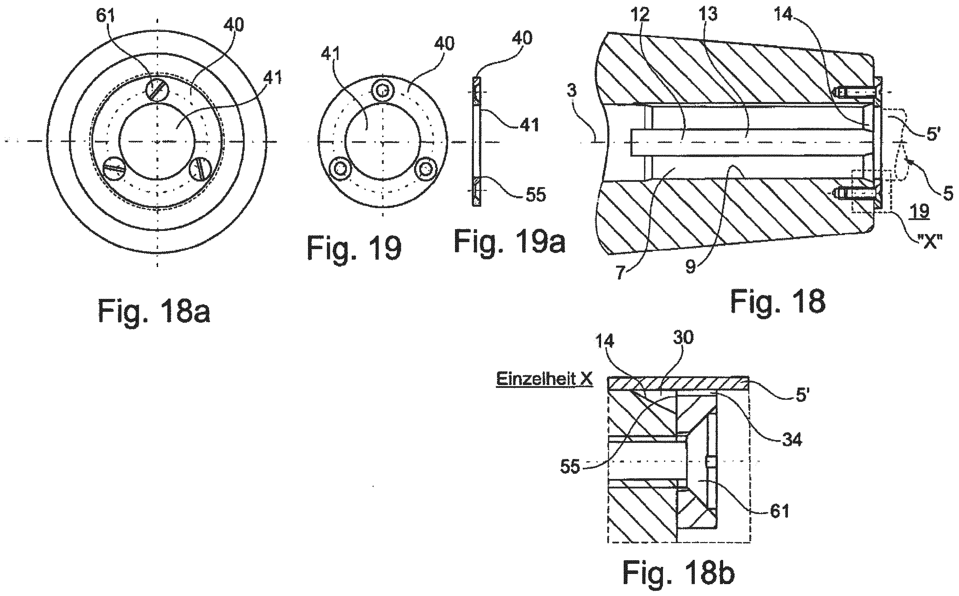

Eine weitere Ausführungsform der Werkzeughaltervorrichtung 1 gemäß den Figuren 18, 18a, 18b sowie 19 und 19a entspricht im Wesentlichen der Ausführungsform gemäß den Figuren 15 und 15a, wobei das Deckelelement mittels einer Schraubverbindung an der Stirnseite 8 des Werkzeughalterkörpers 2 befestigt ist. Bei dieser Ausführungsform ist am Deckelelement 40 ebenfalls eine Stau- und/oder Sammelkante 55 vorhanden, welche den Stau- und/oder Sammelraum 30 mit begrenzt. Zwischen dem Werkzeugschaft 5' und dem Deckelelement ist ein Ringspalt 34 gebildet.

Die Schraubverbindung ist bevorzugt mittels Senkkopfschrauben 61 ausgebildet, da diese bündig mit einer Außenseite der Lochscheibe abschließen und somit eine Störkontur verhindert ist.

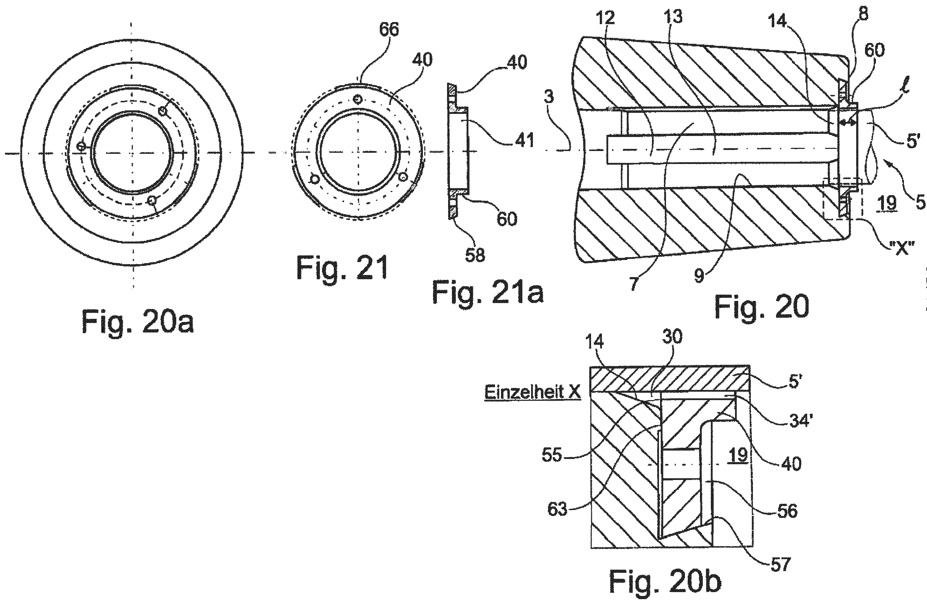

Eine weitere Ausführungsform der Werkzeughaltervorrichtung 1 gemäß den Figuren 20 bis 21a besitzt stirnseitig ebenfalls eine Flachvertiefung 56, in der das Deckelelement 40 befestigt sitzt. Im Unterschied zum Deckelelement 4 0 gemäß der Ausführungsform nach den Figuren 16 bis 17a besitzt das Deckelelement dieser Ausführungsform einen Strahlformkragen 60, dessen axiale Längserstreckung 1 derart gewählt ist, dass der Strahlformkragen 60 ein Stück über die Stirnseite 8 des Werkzeughalterkörpers 2 übersteht. Das Deckelelement 40 besitzt ebenfalls eine Stau- und/oder Sammelkante 55 zur Begrenzung des Stau- und/oder Sammelraumes 30, der radial von der Innenfase 14 begrenzt ist. Das Deckelelement 40 besitzt die Austrittsöffnung 41, so dass ein Strahlformkanal 34' gebildet ist. Im Bereich des Grundes der Flachausnehmung 56 ist zur Aufnahmeöffnung 7 hin diese umgebend ein Ringwulst 63 vorgesehen, auf dem das Deckelelement 40 in axialer Richtung aufsitzt.

Die Flachvertiefung besitzt die Hinterschnittkante 57. Zusätzlich hierzu ist das Deckelelement 40 mit Verriegelungslappen 66 versehen. Die Flachvertiefung und das Deckelelement 40 sind somit nach Art eines Drehbajonettverschlusses verbindbar.

Mit der vorliegenden Erfindung wird eine Vielzahl von Möglichkeiten zur Strahlbeeinflussung und zur Kühlmittelführung aufgezeigt, mit denen es gelingt, einen geschlossenen oder im Wesentlichen geschlossenen Kühlmittelmantel um ein Zerspanungswerkzeug, welches in der Werkzeughaltervorrichtung gehalten ist, auszubilden.

Für den Fachmann ist klar ersichtlich, dass die im Rahmen der Ausführungsbeispiele genauer beschriebenen Merkmale, welche anhand eines Schrumpffutters beschrieben worden sind, ebenso auf ein Flächenspannfutter nach Art einer Weldon- oder Wistle-Notch-Aufnahme übertragbar oder mit deren typischen Ausgestaltungsmerkmalen kombinierbar sind. Gleiches gilt für die Übertragung der beschriebenen Merkmale auf Spannzangenaufnahmen, wie z. B. ER-Spannzangenaufnahmen, OZ-Spannzangenaufnahmen oder Hochgenauigkeits-Spannzangenaufnahmen.

### Bezugszeichenliste:

- 1: Werkzeughaltervorrichtung
- 2: Werkzeughalterkörper
- 3: axiale Längsmittelachse
- 4: Spannabschnitt
- 5: Werkzeug
- 5': Werkzeugschaft
- 6: freies Ende
- 7: Aufnahmeöffnung
- 8: Stirnseite
- 9: Innenseite
- 10: Übergangsbohrung
- 11: Kühlmittelzuführeinrichtung
- 12: Kühlmittelleiteinrichtung
- 13: Flachnuten
- 14: Innenfase
- 15: Nutgrund
- 16: Nutseitenwandabschnitt
- 17: Ringspaltsegment
- 18: Strömungskanäle
- 19: Umgebung
- 20: gestrichelte Linie
- 30: Stau- und/oder Sammelraum
- 31: Ringnut
- 32: Ringbegrenzungssteg
- 33: Begrenzungswandung
- 34: Ringspalt
- 34': Strahlformringkanal
- 40: Deckelelement
- 41: Austrittsöffnung
- 42: Kappe
- 43: Kappenboden
- 44: Schnappeinrichtung
- 45: Außenumfangsnut
- 46: Ringsteg
- 47: Kanal
- 48: Querbohrung
- 49: Verdickungswulst
- 50: Befestigungseinrichtung
- 51: Gegenbefestigungseinrichtung
- 52: Bohrung
- 53: weibliches Gewinde
- 54: männliches Gewinde
- 55: Stau- und/oder Sammelkante
- 56: Flachvertiefung
- 57: Hinterschnittkante
- 58: Außenkante
- 49: Montagebohrung
- 60: Strahlformkragen
- 61: Senkkopfschraube
- 63: Ringwulst
- 66: Verriegelungslappen
- v: Tangentialgeschwindigkeit
- α: Winkel
- b: Breite
- t: Tiefe
- l: Länge
- D: Nenndurchmesser/Außendurchmesser

## Patentansprüche

1. Werkzeughaltervorrichtung mit einem Werkzeughalterkörper (2) zum drehfesten Halten eines Rotationswerkzeugs (5) mit einem Schaft (5') mit einem Spannabschnitt (4) und einer Aufnahmeöffnung (7) für den Schaft (5') des Werkzeuges (5), mit einer Kühlmittelzuführungseinrichtung (11) für unter Druck stehendes Kühlmittel, zumindest einer Kühlmittelleiteinrichtung (12) zum Leiten des Kühlmittels hin zum eingespannten Werkzeugschaft (5'), wobei im Bereich des freien Endes (6) des Werkzeughalterkörpers (2) ein Kühlmittelstau und/oder Sammelraum (30) vorhanden ist, in den die zumindest eine Kühlmittelleiteinrichtung (12) mündet und wobei der Kühlmittelstau und/oder Sammelraum (30) über einen Ringspalt (34) mit der Umgebung der Werkzeughaltervorrichtung (1) verbunden ist, wobei der Kühlmittelstau und/oder Sammelraum (30) und der Ringspalt (34) zumindest teilweise vom Werkzeugschaft (5') begrenzt ist, **dadurch gekennzeichnet, dass** die Kühlmittelleiteinrichtung als Kanal (47) gestaltet ist, der sich von einer Querbohrung (48) im Werkzeughalterkörper (2), die ihrerseits mit einer Übergangsbohrung (10) in Verbindung steht, über die das Kühlmittel im Inneren des Werkzeughalterkörpers (2) herangeführt werden kann, bis zu dessen Stirnseite (8) erstreckt und dort in den Stau- und/oder Sammelraum (30) mündet.

2. Werkzeughaltervorrichtung nach Anspruch 1, **dadurch gekennzeichnet, dass** die Kühlmittelleiteinrichtung als Kanal (47) gestaltet ist, der sich bis zur von einem Deckelelement (40) überdeckten Stirnseite (8) des Werkzeughalters erstreckt und dort in den Stau- und/oder Sammelraum (30) mündet.

3. Werkzeughaltervorrichtung nach einem der vorhergehenden Ansprüche, **dadurch gekennzeichnet, dass** der Stau- und/oder Sammelraum (30) innerhalb der Aufnahmeöffnung (7) angeordnet ist und durch eine Innenfase (14) und ein Deckelelement (40) zumindest teilweise begrenzt ist, wobei die Innenfase (14) im Bereich des freien Endes (6) der Aufnahmeöffnung (7) des Werkzeughalterkörpers (2) angeordnet ist¹.
¹ Beschreibung Seite 12, vorvorletzter und letzter Satz des Absatzes 1

4. Werkzeughaltervorrichtung nach einem der vorhergehenden Ansprüche, **dadurch gekennzeichnet, dass** der Stau- und/oder Sammelraum (30) außerhalb der Aufnahmeöffnung (41) angeordnet ist und zumindest teilweise von der freien Stirnseite (8) des Werkzeughalterkörpers (2) begrenzt ist.

5. Werkzeughaltervorrichtung nach einem der vorhergehenden Ansprüche, **dadurch gekennzeichnet, dass** ein den Stau- und/oder Sammelraum (30) zumindest teilweise begrenzendes² Deckelelement (40) einen elastischen Schnappring oder mehrere einzelne elastischen Schnapplappen aufweist.
² Anspruch 3, Beschreibung Seite 20, 3. Absatz, Seite 24, 1. Absatz, Seite 24 letzter Absatz bis Seite 25, erster Absatz, Seite 30, letzter Satz

6. Werkzeughaltervorrichtung nach einem der vorhergehenden Ansprüche, **dadurch gekennzeichnet, dass** ein den Stau- und/oder Sammelraum (30) zumindest teilweise begrenzendes³ Deckelelement (40) als Befestigungseinrichtung (50) einen Halterring oder mehrere Haltebolzen aufweist, welche in korrespondierenden Gegenbefestigungseinrichtungen (51) in der Stirnseite (8) des Werkzeughalterkörpers (2) sitzt/sitzen.
³ Anspruch 3, Beschreibung Seite 20, 3. Absatz, Seite 24, 1. Absatz, Seite 24 letzter Absatz bis Seite 25, erster Absatz, Seite 30, letzter Satz

7. Werkzeughaltervorrichtung nach einem der vorhergehenden Ansprüche, **dadurch gekennzeichnet, dass** ein den Stau- und/oder Sammelraum (30) zumindest teilweise begrenzendes⁴ Deckelelement (40) als Kappe (42) ausgebildet ist, welche in eine Außenringnut 45 am Werkzeughalterkörper 2 nach Art einer Schnappverbindung eingreift.
⁴ Anspruch 3, Beschreibung Seite 20, 3. Absatz, Seite 24, 1. Absatz, Seite 24 letzter Absatz bis Seite 25, erster Absatz, Seite 30, letzter Satz

8. Werkzeughaltervorrichtung nach einem der vorhergehenden Ansprüche, **dadurch gekennzeichnet, dass** ein den Stau- und/oder Sammelraum (30) zumindest teilweise begrenzendes⁵ Deckelelement (40) als Befestigungseinrichtung (50) eine Schnappverbindungseinrichtung aufweist, welche mit korrespondierenden Gegenschnappeinrichtungen (51) in der Stirnseite (8) des Werkzeughalterkörpers (2) zusammenwirken.
⁵ Anspruch 3, Beschreibung Seite 20, 3. Absatz, Seite 24, 1. Absatz, Seite 24 letzter Absatz bis Seite 25, erster Absatz, Seite 30, letzter Satz

9. Werkzeughaltervorrichtung nach einem der vorangegangenen Ansprüche, **dadurch gekennzeichnet, dass** ein den Stau- und/oder Sammelraum (30) zumindest teilweise begrenzendes⁶ Deckelelement (40) radial bündig mit der Außenkontur des Werkzeughalterkörpers (2) abschließt oder relativ zur Außenkontur radial zurückgesetzt ausgebildet ist.
⁶ Anspruch 3, Beschreibung Seite 20, 3. Absatz, Seite 24, 1. Absatz, Seite 24 letzter Absatz bis Seite 25, erster Absatz, Seite 30, letzter Satz

10. Werkzeughaltervorrichtung nach einem der vorangegangenen Ansprüche, **dadurch gekennzeichnet, dass** ein den Stau- und/oder Sammelraum (30) zumindest teilweise begrenzendes⁷ Deckelelement (40) einen Strahlformkragen (60) aufweist, so dass ein Strahlformringkanal (34') mit einer Länge (l) gebildet ist.
⁷ Anspruch 3, Beschreibung Seite 20, 3. Absatz, Seite 24, 1. Absatz, Seite 24 letzter Absatz bis Seite 25, erster Absatz, Seite 30, letzter Satz

11. Werkzeughaltervorrichtung nach Anspruch 10, **dadurch gekennzeichnet, dass** das Verhältnis der axialen Länge (l) des Strahlformringkanals (34')zum Werkzeugschaftdurchmesser D im Bereich zwischen 0,2:1 und 1:1, insbesondere im Bereich zwischen 0,3:1 und 0,8:1, besonders bevorzugt im Bereich von 0,4:1 bis 0,7:1 liegt.

## Claims

1. Tool holder device having a tool holder body (2) for holding in a rotationally fixed manner a rotary tool (5) having a shank (5') having a clamping portion (4) and a receptacle opening (7) for the shank (5') of the tool (5), having a coolant supply installation (11) for a pressurized coolant, at least one coolant directing installation (12) for directing the coolant toward the clamped tool shank (5'), wherein a coolant backup and/or collection chamber (30) is present in the region of the free end (6) of the tool holder body (2), the at least one coolant directing installation (12) opening into said coolant backup and/or collection chamber (30), and wherein the coolant backup and/or collection chamber (30) by way of an annular gap (34) is connected to the environment of the tool holder device (1), wherein the coolant backup and/or collection chamber (30) and the annular gap (34) are at least partially delimited by the tool shank (5'), **characterized in that** the coolant directing installation is designed as a duct (47) which from a transverse bore (48) in the tool holder body (2) extends to the end side (8) of the latter and at said end side (8) opens into the backup and/or collection chamber (30), said transverse bore (48) in turn being connected to a passage bore (10) by way of which the coolant in the interior of the tool holder body (2) can be advanced.

2. Tool holder device according to Claim 1, **characterized in that** the coolant directing installation is designed as a duct (47) which extends up to the end side (8) of the tool holder that is covered by a cover element (40) and at said end side (8) opens into the backup and/or collection chamber (30).

3. Tool holder device according to one of the preceding claims, **characterized in that** the backup and/or collection chamber (30) is disposed within the receptacle opening (7) and is at least partially delimited by an inner chamfer (14) and a cover element (40), wherein the inner chamfer (14) is disposed in the region of the free end (6) of the receptacle opening (7) of the tool holder body (2).

4. Tool holder device according to one of the preceding claims, **characterized in that** the backup and/or collection chamber (30) is disposed outside the receptacle opening (41) and is at least partially delimited by the free end side (8) of the tool holder body (2).

5. Tool holder device according to one of the preceding claims, **characterized in that** a cover element (40) that at least partially delimits the backup and/or collection chamber (30) has an elastic snap-fit ring or a plurality of individual elastic snap-fit tabs.

6. Tool holder device according to one of the preceding claims, **characterized in that** a cover element (40) that at least partially delimits the backup and/or collection chamber (30) as a fastening installation (50) has a retaining ring or a plurality of retaining pins which sits/sit in corresponding mating fastening installations (51) in the end side (8) of the tool holder body (2).

7. Tool holder device according to one of the preceding claims, **characterized in that** a cover element (40) that at least partially delimits the backup and/or collection chamber (30) is configured as a cap (42) which in the manner of a snap-fit connection engages in an outer annular groove (45) on the tool holder body (2).

8. Tool holder device according to one of the preceding claims, **characterized in that** a cover element (40) that at least partially delimits the backup and/or collection chamber (30) as a fastening installation (50) has a snap-fit connection installation which interacts with corresponding mating snap-fit installations (51) in the end side (8) of the tool holder body (2).

9. Tool holder device according to one of the preceding claims, **characterized in that** a cover element (40) that at least partially delimits the backup and/or collection chamber (30) terminates so as to be radially flush with the external contour of the tool holder body (2) or is configured so as to be radially recessed relative to the external contour.

10. Tool holder device according to one of the preceding claims, **characterized in that** a cover element (40) that at least partially delimits the backup and/or collection chamber (30) has a jet-forming collar (60) so that a jet-forming annular duct (34') having a length (1) is formed.

11. Tool holder device according to Claim 10, **characterized in that** the ratio of the axial length (1) of the jet-forming annular duct (34') to the tool shank diameter D is in the range between 0.2:1 and 1:1, in particular in the range between 0.3:1 and 0.8:1, particularly preferably in the range from 0.4:1 to 0.7:1.

## Revendications

1. Dispositif porte-outil muni d'un corps porte-outil (2) pour le maintien immobile en rotation d'un outil rotatif (5) muni d'une tige (5'), muni d'une section de serrage (4) et d'une ouverture de réception (7) pour la tige (5') de l'outil (5), muni d'un appareil d'amenée de fluide de refroidissement (11) pour du fluide de refroidissement sous pression, d'au moins un appareil de guidage de fluide de refroidissement (12) pour le guidage du fluide de refroidissement vers la tige d'outil (5') serrée, une chambre d'accumulation et/ou de collecte de fluide de refroidissement (30) étant présente dans la zone de l'extrémité libre (6) du corps porte-outil (2), dans laquelle l'au moins un appareil de guidage de fluide de refroidissement (12) débouche, et la chambre d'accumulation et/ou de collecte de fluide de refroidissement (30) étant reliée à l'environnement du dispositif porte-outil (1) par l'intermédiaire d'une fente annulaire (34), la chambre d'accumulation et/ou de collecte de fluide de refroidissement (30) et la fente annulaire (34) étant délimitées au moins partiellement par la tige d'outil (5'), **caractérisé en ce que** l'appareil de guidage de fluide de refroidissement est conçu sous la forme d'un canal (47), qui s'étend depuis un alésage transversal (48) dans le corps porte-outil (2), qui est lui-même relié à un alésage de transition (10), par l'intermédiaire duquel le fluide de refroidissement peut être dirigé à l'intérieur du corps porte-outil (2), jusqu'à son côté frontal (8), et y débouche dans la chambre d'accumulation et/ou de collecte (30).

2. Dispositif porte-outil selon la revendication 1, **caractérisé en ce que** l'appareil de guidage de fluide de refroidissement est conçu sous la forme d'un canal (47), qui s'étend jusqu'au côté frontal (8) du porte-outil recouvert par un élément couvercle (40) et y débouche dans la chambre d'accumulation et/ou de collecte (30).

3. Dispositif porte-outil selon l'une quelconque des revendications précédentes, **caractérisé en ce que** la chambre d'accumulation et/ou de collecte (30) est agencée à l'intérieur de l'ouverture de réception (7) et est au moins partiellement délimitée par un chanfrein intérieur (14) et un élément couvercle (40), le chanfrein intérieur (14) étant agencé dans la zone de l'extrémité libre (6) de l'ouverture de réception (7) du corps porte-outil (2).

4. Dispositif porte-outil selon l'une quelconque des revendications précédentes, **caractérisé en ce que** la chambre d'accumulation et/ou de collecte (30) est agencée à l'extérieur de l'ouverture de réception (41) et est délimitée au moins partiellement par le côté frontal libre (8) du corps porte-outil (2).

5. Dispositif porte-outil selon l'une quelconque des revendications précédentes, **caractérisé en ce qu'**un élément couvercle (40) délimitant au moins partiellement la chambre d'accumulation et/ou de collecte (30) comprend une bague à enclenchement élastique ou plusieurs pattes à enclenchement élastiques individuelles.

6. Dispositif porte-outil selon l'une quelconque des revendications précédentes, **caractérisé en ce qu'**un élément couvercle (40) délimitant au moins partiellement la chambre d'accumulation et/ou de collecte (30) comprend en tant qu'appareil de fixation (50) une bague de maintien ou plusieurs boulons de maintien, qui repose/reposent dans des appareils de fixation complémentaires correspondants (51) dans le côté frontal (8) du corps porte-outil (2).

7. Dispositif porte-outil selon l'une quelconque des revendications précédentes, **caractérisé en ce qu'**un élément couvercle (40) délimitant au moins partiellement la chambre d'accumulation et/ou de collecte (30) est configurée sous la forme d'un capuchon (42), qui pénètre dans une rainure annulaire extérieure (45) sur le corps porte-outil (2) à la façon d'une liaison à enclenchement.

8. Dispositif porte-outil selon l'une quelconque des revendications précédentes, **caractérisé en ce qu'**un élément couvercle (40) délimitant au moins partiellement la chambre d'accumulation et/ou de collecte (30) comprend en tant qu'appareil de fixation (50) un appareil de liaison à enclenchement, qui coopère avec des appareils à enclenchement complémentaires correspondants (51) dans le côté frontal (8) du corps porte-outil (2).

9. Dispositif porte-outil selon l'une quelconque des revendications précédentes, **caractérisé en ce qu'**un élément couvercle (40) délimitant au moins partiellement la chambre d'accumulation et/ou de collecte (30) se termine radialement en affleurement avec le contour extérieur du corps porte-outil (2) ou est configuré radialement en retrait relativement au contour extérieur.

10. Dispositif porte-outil selon l'une quelconque des revendications précédentes, **caractérisé en ce qu'**un élément couvercle (40) délimitant au moins partiellement la chambre d'accumulation et/ou de collecte (30) comprend un collet de mise en forme de jet (60), de telle sorte qu'un canal annulaire de mise en forme de jet (34') ayant une longueur (1) soit formé.

11. Dispositif porte-outil selon la revendication 10, **caractérisé en ce que** le rapport entre la longueur axiale (1) du canal annulaire de mise en forme de jet (34') et le diamètre de tige d'outil D se situe dans la plage comprise entre 0,2:1 et 1:1, notamment dans la plage comprise entre 0,3:1 et 0,8:1, de manière particulièrement préférée dans la plage allant de 0,4:1 à 0,7:1.
